# FASCICULE DE BREVET EUROPEEN

(11) **EP 0 470 548 B1**
(45) Date de publication et mention de la délivrance du brevet: **25.09.1996**
(21) Numéro de dépôt: 91113133.2
(22) Date de dépôt: 05.08.1991
(51) Int. Cl.: H04M 9/08

(54) **Procédé de contrôle de l'atténuation pour appareil téléphonique numérique à fonctionnement de type "main libre"**
Verfahren zur Kontrolle der Dämpfung bei einem digitalen Freisprechtelefonapparat
Method for controlling attenuation in a digital hands-free telephone set

(30) Priorité: 08.08.1990 FR 9010123
(43) Date de publication de la demande: 12.02.1992
(73) Titulaire: ALCATEL BUSINESS SYSTEMS, F-75008 Paris (FR)
(72) Inventeur: Poirier, Jean-Pierre, F-93200 Saint-Denis (FR); Bonneau, François, F-95210 Saint Gratien (FR); Dutey, Denis, F-42600 Montbrison (FR)
(74) Mandataire: Weinmiller, Jürgen

(56) Documents cités:
- EP-A- 0 364 312
- DE-A- 3 137 314
- GB-A- 2 174 578
- US-A- 4 715 062

## Description

La présente invention se rapporte à un procédé de contrôle de l'atténuation pour appareil téléphonique numérique à fonctionnement de type "main libre".

Un poste téléphonique "main libre" est un poste pour lequel un microphone sensible et un haut-parleur, tous deux associés à des amplificateurs à grand gain, sont intégrés au boîtier de ce poste, ce qui dispense l'usager du maintien d'un combiné à proximité immédiate de la bouche et de l'oreille.

Cette facilité d'utilisation est cependant compensée par une servitude, qui est la nécessité de converser en alternat, de manière à éviter les accrochages, tels que l'effet LARSEN, qui prendraient naissance dans le cas contraire, en raison des couplages acoustique, mécanique et électrique entre les voies émission et réception.

Ce fonctionnement en alternat est bien entendu automatique et de nombreux documents, tel le document FR-A-2.518.854, en font une description détaillée. Il s'agit dans cet art connu de dispositifs analogiques qui testent en permanence le niveau du signal émis et reçu respectivement, pour en déduire la voie qu'il convient de valider. Cette voie est alors normalement transmise sans atténuation autre que son atténuation propre, tandis que l'autre est soumise à une forte atténuation, généralement de l'ordre de 30 à 40 dB pour fixer les idées. Cette discrimination permet de déterminer la voie émission en début de conversation, puis de changer éventuellement de voie lorsque cette émission vient à s'arrêter, même temporairement. En cours d'émission, l'autre voie ne peut en principe pas être validée, même si elle est malencontreusement activée pour couper la parole à l'autre usager, puisqu'elle est de toute façon fortement atténuée.

Le traitement analogique qui est mis en oeuvre dans ces dispositifs connus a pour inconvénient de ne pas permettre une détection et une comparaison assez rapides des signaux présents sur les voies émission et réception.

La prise de décision qui nécessite dans ce cas une bonne vingtaine de millisecondes, est trop lente pour éviter que le début de la phrase correspondante ne soit tronqué, de sorte qu'il y a perte d'information à chaque début de conversation et à chaque fois qu'est effectuée la commutation d'un correspondant sur l'autre.

En outre, ces réalisations par composants analogiques nécessitent un grand nombre de composants et une surface de circuit imprimé non négligeable, ce qui pénalise l'encombrement et le prix de revient des appareils.

Il est par ailleurs connu par le document GB-A-2 174 578 un appareil téléphonique de type numérique comportant un microcontrôleur de traitement des données numériques, un circuit codeur décodeur ou codec assurant la conversion des signaux de parole analogiques sous forme numérique et vice versa, un microphone et un haut-parleur avec leurs circuits d'amplification respectifs, ce qui lui permet d'offrir une fonction dite "main libre". Le microcontrôleur détermine en permanence par calcul une moyenne sur un nombre prédéterminé d'échantillons numériques de parole successifs pour les signaux simultanément présents dans chacune des voies émission et réception de manière à déterminer quelle voie doit être transmise ou continuer à être transmise sans atténuation et corrélativement celle qui doit être atténuée. Pour mieux contrôler l'atténuation des voies respectives émission et réception pour un appareil téléphonique numérique en fonctionnement "main libre", l'invention propose un procédé de contrôle de l'atténuation pour appareil téléphonique numérique à fonctionnement de type main libre doté d'un microcontrôleur assurant le traitement des données numériques, d'un circuit, de type codeur décodeur filtrant dit cofidec, pour la conversion des signaux de parole analogiques sous forme numérique et vice versa, d'au moins un microphone et un haut-parleur reliés au circuit cofidec par des circuits d'amplification qui leur sont associés, ledit microcontrôleur disposant de moyens de calcul permettant notamment d'établir en permanence une moyenne sur un nombre prédéterminé d'échantillons numériques successifs obtenus à partir des signaux présents simultanément sur chacune des voies émission et réception de signaux au niveau d'entrées du microcontrôleur, les dits moyens permettant aussi de déduire celle des voies émission ou réception qui doit être ou continuer d'être transmise sans atténuation et corrélativement celle qui doit être atténuée.

Selon une caractéristique de l'invention, le procédé comporte une détermination, par l'intermédiaire des moyens de calcul du microcontrôleur, de la position, en coordonnées cartésiennes, du point représentatif des moyennes des voies émission et réception par rapport à trois zones constituées par une zone d'hystérésis séparant une zone, dite de commutation sur la voie émission, pour laquelle la voie émission est prévue sans atténuation et une zone, dite de commutation sur la voie réception, pour laquelle la voie réception est prévue sans atténuation, l'éventuelle atténuation pour chacune de ces voies étant établie en fonction de tables de valeurs respectivement atténuées et non-atténuées du microcontrôleur.

L'invention sera comprise et ses avantages et caractéristiques ressortiront, lors de la description suivante d'un exemple de réalisation non limitatif d'un poste téléphonique "main libre" en référence au dessin schématique annexé dans lequel:
- Figure 1 est un schéma synoptique de ce poste téléphonique;
- Figure 2 est un synoptique général de fonctionnement de sa fonction "main libre";
- Figure 3 est un synoptique explicatif du mode de calcul de chaque somme d'échantillons successifs;
- Figure 4 est un synoptique explicatif du mode de calcul de chaque moyenne de ces mêmes échantillons, avec précaution contre les commutations de voies intempestives;
- Figure 5 est une représentation graphique destinée à faciliter la compréhension du mode de prise de décision sur la voie à atténuer; et
- Figure 6 est un synoptique explicatif de ce mode de prise de décision.

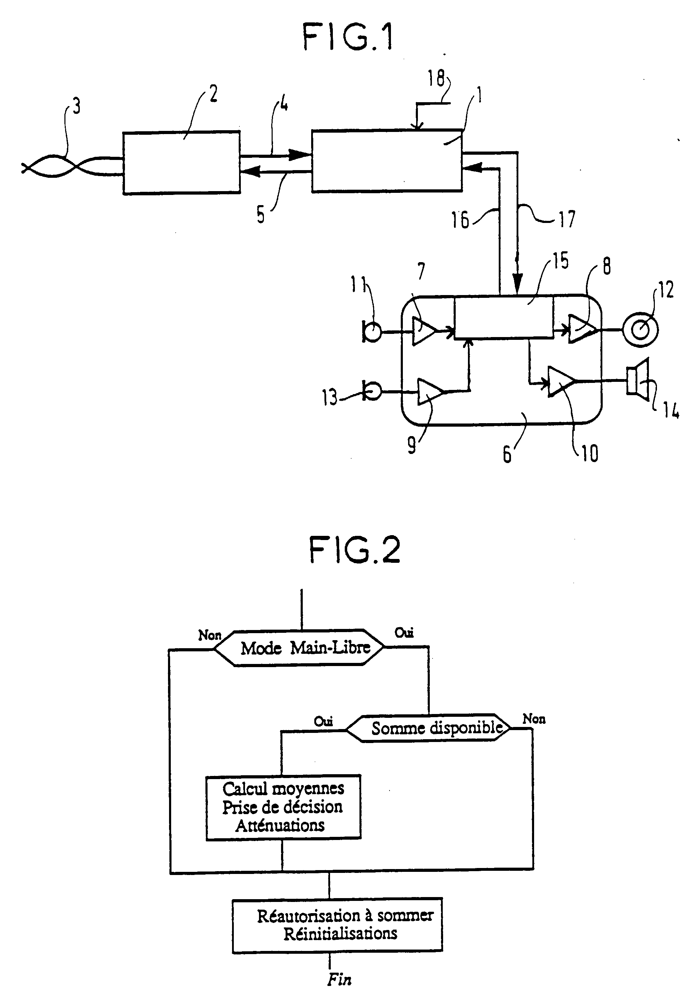

En se reportant à la figure 1, il s'agit d'un poste téléphonique numérique de constitution générale en soi assez classique, et comportant:
- Un microcontrôleur 1 qui gère toutes les données numériques de parole qui transitent à travers le poste. Il s'agit d'un organe logique de commande et de calcul qui comporte un microprocesseur de gestion ainsi qu'au moins une mémoire non-volatile "ROM" et au moins une mémoire volatile "RAM".
- Une interface numérique 2 entre la ligne téléphonique numérique 3 et ce microcontrôleur 1. Cette interface est reliée à ce microcontrôleur par deux voies unidirectionelles de transmission de signaux numériques de la parole, dont une voie de réception 4 et une voie d'émission 5.
- Une carte "Audio" 6 qui comporte les amplificateurs analogiques 7,8,9,10, relatifs respectivement au microphone 11 du combiné, à l'écouteur 12 de ce combiné, au microphone 13 qui est présentement incorporé au boitier pour la fonction "main libre", et au haut-parleur 14 qui est présentement incorporé à ce boitier pour cette fonction "main libre". En outre, cette carte 6 porte un circuit "COFIDEC" (Codage-Filtrage-Décodage) 15, c'est à dire un circuit, en soi très classique pour les postes numériques, apte à assurer la conversion des données de parole analogiques en données de parole numérique et vice-versa. Ce circuit COFIDEC 15 est connecté au microcontrôleur 1 par deux voies unidirectionnelles de transmission de signaux numériques de la parole, dont une voie émission 16 et une voie réception 17.

En outre, un commutateur manuel 18 est relié à un des accès du microcontrôleur 1, afin de sélectionner manuellement soit la fonction "main-libre", soit la fonction "utilisation du combiné". A noter qu'un tel commutateur est classiquement prévu sur le clavier des postes "main-libre" analogiques de l'art connu.

Les valeurs de la parole sont numérisées par l'intermédiaire du circuit COFIDEC. Celui-ci code par exemple les échantillons successifs selon une loi de compression, les plus connues étant celle dite de type "A" présentée ici ou encore celle dite de type mu. Les données sont présentées sur le bus de l'interface "ligne" 2 (c'est-à-dire le bus comprennant les voies 4 et 5) toutes les 125 microsecondes.

En exploitation avec le combiné, le microcontrôleur 1 est transparent : il restitue fidèlement les données fournies par le COFIDEC et par la ligne téléphonique. En mode main-libre au contraire, il traite ces signaux numériques afin de prendre une décision de commutation apte à privilégier, conformément au principe de conversation en alternat, la voie émission ou la voie réception.

Le poste téléphonique de la Figure 1 fonctionne donc, à l'instar des postes analogiques de l'art connu, en alternat, selon donc le même principe général, mais réalisé en mode numérique et avec quelques particularités, tel qu'il sera maintenant expliqué en référence aux figures 2 à 6.

Le fonctionnement général de ce poste numérique en module main-libre est représenté en Figure 2 sous forme d'algorithme.

Le microcontrôleur teste d'abord la position du commutateur 18. Si ce dernier n'est pas en mode main-libre, le poste fonctionne en poste numérique classique à l'aide du combiné à microphone 11 et écouteur 12.

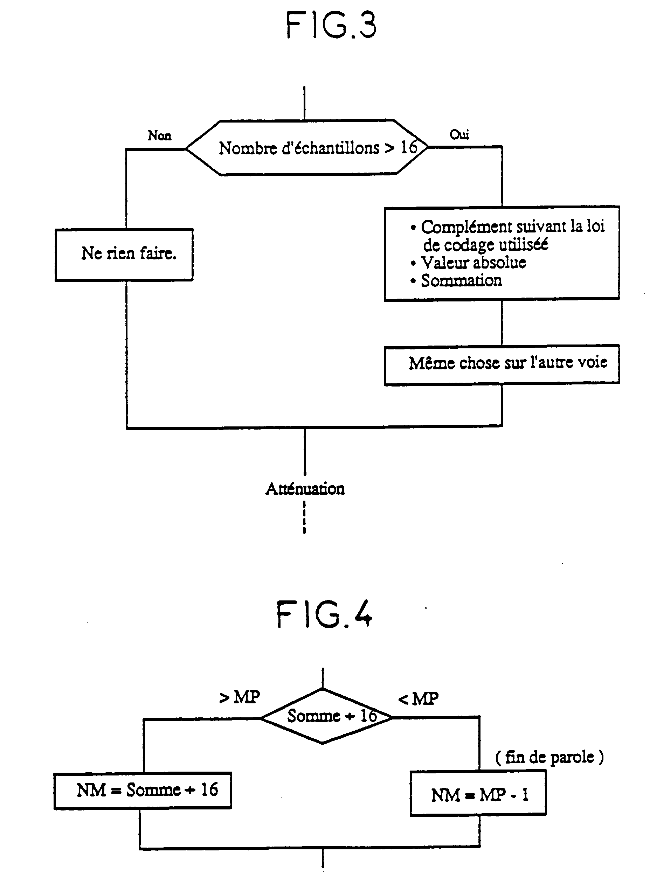

Si au contraire ce commutateur 18 est en position main-libre, le microcontrôleur effectue des additions successives des échantillons numérisés de parole, disponibles toutes les 125 microsecondes par exemple, qui sont présents aux entrées respectives d'émission 16 et de réception 4 du microcontrôleur 1. Une somme est effectuée à chaque fois sur seize échantillons successifs et de même façon sur les deux voies 16 et 4. La manière particulière dont une telle somme est effectuée est schématisée en Figure 3 et sera détaillée ci-après.

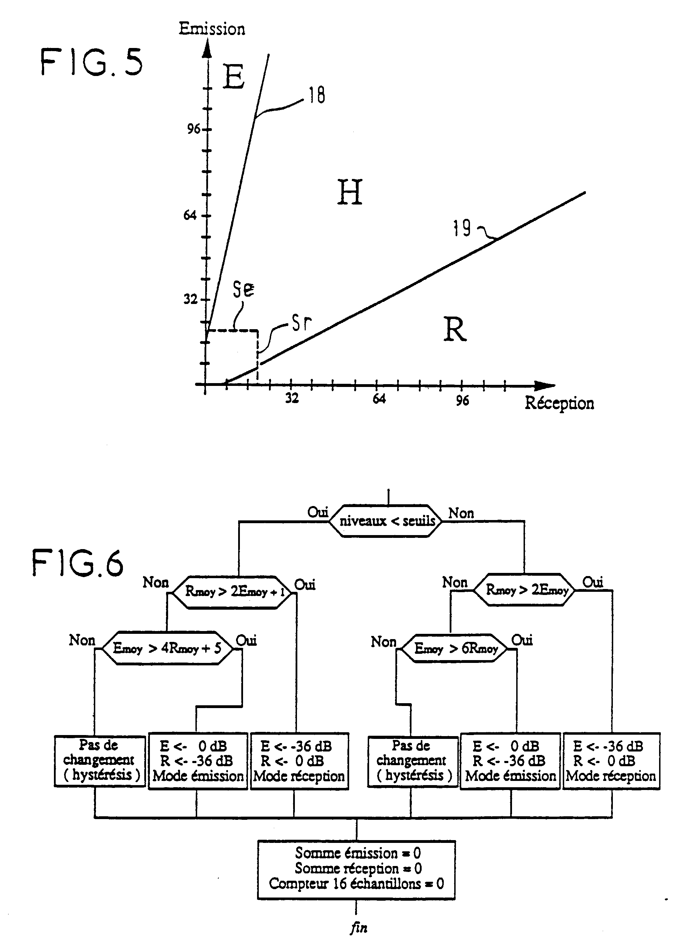

Lorsque cette somme est disponible sur la voie considérée, le microcontrôleur 1 en déduit la moyenne relative à ces 16 échantillons, tout en prenant, comme on le verra lors de l'explication de la figure 4, une précaution spéciale afin d'éviter une commutation intempestive des voies entre les mots d'une même phrase, ce qui aurait pour résuitat de "hacher" la conversation. Les deux moyennes (une sur chaque voie) étant déterminées, le microcontrôleur effectue, selon le procédé qui sera expliqué ci-après en référence aux figures 5 et 6, la prise de décision sur la voie qui doit seule être validée ( voie émission OU voie réception) et la mise en oeuvre numérique des atténuations qui doivent en conséquence être appliquées sur les deux voies: dans cet exemple 0 dB sur la voie validée et 36 dB sur la voie non-validée.

Ceci étant effectué, les différents compteurs du microcontrôleur sont réinitialisés et les sommations d'échantillons sur les deux voies sont à nouveau mises en route.

La figure 3 représente, sous forme d'algorithme, le calcul des amplitudes moyennes des signaux émission et réception, le procédé de calcul étant le même pour ces deux voies. Les échantillons, arrivant toutes les 125 microsecondes, sont complémentés de manière à obtenir les valeurs codées compressées sans inversion conformément à la loi particulière de codage du circuit COFIDEC (loi de compression dite de type "A"). Ils sont rendus positifs par mise à 1 du bit de poids le plus fort, puis sommés jusqu'à concurrence de 16 échantillons. Cette somme divisée par 16 devient la moyenne de la voie scrutée. A noter que ce nombre 16 est particulièrement avantageux car il permet une bonne évaluation de la moyenne du signal tout en étant très pratique à mettre en oeuvre par programmation. Cette somme étant disponible toutes les 2 millisecondes (16 échantillons successifs apparaissant chacun toutes les 125 microsecondes), ce module main-libre est apte à valider l'une des deux voies toutes les 2 millisecondes environ, ce qui est dix fois plus rapide que les dispositifs analogiques de l'art connu.

Cette sommation étant effectuée sur chaque voie, la figure 4 montre comment est calculée la nouvelle moyenne NM en fonction de la moyenne précédemment calculée MP.

On sait en effet que, du moins en langue française, l'amplitude de la parole subit une atténuation considérable en fin de mot. En l'absence de précaution particulière, il pourrait arriver que le son sur l'autre voie, bien qu'il soit atténué par le principe du fonctionnement en alternat, devienne plus intense que celui exprimé en fin de mot sur la voie qui parle: il y aurait alors commutation malencontreuse sur cette autre voie, avec pour résultat un "hachage" de la conversation téléphonique.

Pour éviter ce phénomène, le calculateur détermine (figure 4) si la somme qu'il vient de calculer sur ces 16 échantillons est, lorsqu'elle est divisée par 16, supérieure ou inférieure à la moyenne précédente MP. Si elle est supérieure, c'est que l'on n'est pas en fin de mot, et la nouvelle moyenne NM est prise tout à fait normalement égale à cette somme divisée par 16. Si elle est inférieure, la parole est en train de chûter et, pour limiter cette décroissance, la nouvelle moyenne est prise égale à la moyenne précédente MP diminuée seulement d'une unité: on instaure ainsi artificiellement un temps de maintien du niveau entre les mots, ce qui évite le phénomène de "hachage" précité.

Les deux moyennes, émission et réception, étant calculées de cette façon sur les deux voies, le calculateur détermine alors la voie à atténuer: c'est la phase finale de prise de décision et d'atténuation sur une des voies, qui sera maintenant explicitée en référence aux figures 5 et 6.

La figure 5 est un graphique en coordonnées cartésiennes, avec les moyennes "Réception" ci-dessus définies portées en abscisses et les moyennes "Emission" portées en ordonnées.

Ce graphique fait apparaître trois zones séparées par deux courbes 18,19 approximativement linéaires:
- Une zone d'émission **E**, dans laquelle la voie privilégiée, c'est-à-dire non atténuée, est la voie émission;
- Une zone réception **R**, dans laquelle la voie privilégiée est sans conteste la voie réception;
- Une zone d'hystérésis **H**, dans laquelle aucune commutation nouvelle n'est effectuée.

En d'autres termes, la zone **E** symbolise l'activation de la voie Emission, la zone **R** l'activation de la voie Réception, et la zone **H** une zone qui privilégie la voie validée par rapport à celle atténuée et qui est délimitée par deux courbes de transition: réception vers émission et émission vers réception.

En outre, dans la zone des faibles moyennes, deux valeurs de seuil Se et Sr délimitent une différence de mode de traitement de l'opération de prise de décision.

Cette prise de décision est schématisée sur la figure 6 sous forme d'algorithme:

On teste tout d'abord les niveaux (moyennes calculées), pour savoir si l'on se trouve dans la zone de faibles niveaux délimitée par Se et Sr. Si la réponse est OUI, le traitement est le suivant (partie gauche du synoptique de la figure 6, pour lequel les variables Rmoy et Emoy représentent les moyennes en réception et émission codées sur 8 bits et variant donc de 0 à 255 niveaux):

Si la variable Rmoy est supérieure à 2 fois la variable Emoy plus l'unité, le mode réception est validé, c'est-à-dire n'est pas atténué, et le mode émission est inhibé, c'est-à-dire est atténué de (dans cet exemple) 36 dB.

A noter que la transparence d'une voie et l'atténuation de l'autre est effectuée numériquement par l'intermédiaire de tables prévues en conséquence dans la mémoire non-volatile, ou "ROM", du microcontrôleur. Le COFIDEC 15 fournit 127 niveaux positifs et négatifs, répartis selon la loi de codage "A" précitée. Cette loi est connue mathématiquement, et il est aisé de déterminer la correspondance entre la valeur du signal analogique et le code fourni ou reçu par le COFIDEC. On calcule en conséquence deux tables de telle sorte que les valeurs venant de la ligne ou du COFIDEC indiquent au microcontrôleur le saut dans la table d'atténuation choisie. Ainsi, le code extrait de la table représente le code de la valeur atténuée de 0 ou de 36 dB.

Si à contrario cette variable Rmoy n'est pas supérieure à 2Emoy+1, il faut savoir si l'on est ou non dans la zone d'hystérésis. La variable Emoy est alors comparée à la valeur 4Rmoy+5. Si elle lui est supérieure, c'est qu'on est bien dans la zone d'hystérésis, et il n'y a en conséquence pas de changement. Si elle lui est inférieure, il y a commutation en mode émission, et la voie émission n'est pas atténuée, tandis que la voie réception est atténuée de 36 dB grâce aux tables numériques précitées.

Si maintenant les deux niveaux ne sont pas inférieurs aux seuils Se et Sr, le traitement (partie droite de la figure 6) est semblable à celui qui vient d'être décrit, mais la valeur "2Emoy+1" est remplaçée par "2Emoy" tandis que la valeur "4RMoy+5" est remplaçée par "6Rmoy".

Après la prise de décision, l'ensemble est réinitialisé comme indiqué au bas de la figure 6, et toutes ces opérations numériques peuvent recommencer en vue d'une nouvelle prise de décision sur les 16 échantillons suivants.

Comme il va de soi, l'invention n'est pas limitée à l'exemple de réalisation qui vient d'être décrit. Elle s'applique bien au contraire à d'autres réalisation numériques équivalentes, qu'elles soient plus sophistiquées ou non. Par "appareil téléphonique", on entend aussi bien un poste téléphonique proprement dit que tout autre terminal téléphonique apte à recevoir et à transmettre la parole, tel que par exemple un répondeur.

## Revendications

1. Procédé de contrôle de l'atténuation pour appareil téléphonique numérique à fonctionnement de type main libre doté d'un microcontrôleur (1) assurant le traitement des données numériques, d'un circuit (15), de type codeur décodeur filtrant dit cofidec, pour la conversion des signaux de parole analogiques sous forme numérique et vice versa, d'au moins un microphone (13) et un haut-parleur (14) reliés au circuit cofidec par des circuits d'amplification (7 à 10) qui leur sont associés, ledit microcontrôleur disposant de moyens de calcul permettant notamment d'établir en permanence une moyenne sur un nombre prédéterminé d'échantillons numériques successifs obtenus à partir des signaux présents, simultanément, sur chacune des voies émission et réception de signaux au niveau d'entrées (16 et 4) du microcontrôleur, les dits moyens permettant aussi de déduire celle des voies émission ou réception qui doit être ou continuer d'être transmise sans atténuation et corrélativement celle qui doit être atténuée, caractérisé en ce qu'il comporte une détermination, par l'intermédiaire des moyens de calcul du microcontrôleur, de la position, en coordonnées cartésiennes, du point représentatif des moyennes (Emoy et Rmoy) des voies émission et réception par rapport à trois zones constituées par une zone d'hystérésis (H) séparant une zone (E), dite de commutation sur la voie émission, pour laquelle la voie émission est prévue sans atténuation et une zone (R), dite de commutation sur la voie réception, pour laquelle la voie réception est prévue sans atténuation, l'éventuelle atténuation pour chacune de ces voies étant établie en fonction de tables de valeurs respectivement atténuées et non-atténuées du microcontrôleur.

2. Procédé selon la revendication 1, caractérisé en ce qu'il comporte une détermination de la position du point représentatif des moyennes par rapport à une zone de faibles moyennes définies par deux valeurs de seuil (Se et Sr), par l'intermédiaire des moyens de calcul du microcontrôleur, et une décision d'atténuation de la voie émission et de non-atténuation de la voie réception, si ce point représentatif est à l'intérieur de la zone de faibles moyennes et si la moyenne en réception (Rmoy) est supérieure à deux fois la moyenne en émission (Emoy) augmentée d'une unité, une décision d'atténuation de la voie réception et de non-atténuation de la voie émission si le point représentatif est à l'intérieur de la zone de faibles moyennes, si la moyenne en réception (Rmoy) est inférieure ou égale à deux fois la moyenne en émission (Emoy) augmentée d'une unité et si cette moyenne en émission est inférieure à quatre fois la moyenne en réception (Rmoy) augmentée de cinq unités ou une décision d'une absence de changement pour les voies émission et réception si le point représentatif est à l'intérieur de la zone de faibles moyennes, si la moyenne en réception (Rmoy) est inférieure à deux fois la moyenne en émission (Emoy) augmentée d'une unité et si cette moyenne en émission est supérieure à quatre fois la moyenne en réception (Rmoy) augmentée de cinq unités, cette décision étant prise par l'intermédiaire des moyens de calcul du microcontrôleur. 3/ Procédé selon la revendication 2, caractérisé en ce qu'il comporte une décision d'atténuation de la voie émission et de non-atténuation de la voie réception, si le point représentatif est à l'extérieur de la zone de faibles moyennes et si la moyenne en réception (Rmoy) est supérieure à deux fois la moyenne en émission (Emoy), une décision d'atténuation de la voie réception et de non-atténuation de la voie émission si le point représentatif est à l'extérieur de la zone de faibles moyennes, si la moyenne en réception (Rmoy) est inférieure ou égale à deux fois la moyenne en émission (Emoy) et si cette moyenne en émission est supérieure à six fois la moyenne en réception (Rmoy) ou une décision d'absence de changement pour les voies émission et réception si le point représentatif est à l'extérieur de la zone de faibles moyennes, si la moyenne en réception (Rmoy) est inférieure ou égale à deux fois la moyenne en émission (Emoy) et si cette moyenne en émission est supérieure à six fois la moyenne en réception (Rmoy), cette décision étant prise par l'intermédiaire des moyens de calcul du microcontrôleur.

## Patentansprüche

1. Verfahren zur Kontrolle der Dämpfung für einen digitalen Telefonapparat, der eine Freisprechfunktion besitzt, mit einem Mikrokontrollorgan (1), das die digitalen Daten verarbeitet, mit einer Kodier-Dekodier-Filterschaltung (15), auch Cofidec genannt, die die analogen Sprachsignale in digitale Form und umgekehrt umwandelt, mit mindestens einem Mikrophon (13) und einem Lautsprecher (14), die an die Cofidec-Schaltung über ihnen zugeordnete Verstärkungsschaltungen (7 bis 10) angeschlossen sind, wobei das Mikrokontrollorgan Rechenmittel enthält, die insbesondere permanent einen Mittelwert über eine vorgegebene Anzahl von aufeinanderfolgenden digitalen Tastproben aufgrund der Signale berechnen, die gleichzeitig auf dem Sende- und dem Empfangskanal für Signale in Höhe der Eingänge (16 und 4) des Mikrokontrollorgans vorliegen, wobei diese Mittel auch den Sendekanal oder den Empfangskanal auswählen können, der ohne Dämpfung übertragen oder weiterübertragen soll, sowie dementsprechend denjenigen, der gedämpft werden soll, dadurch gekennzeichnet, daß mithilfe der Rechenmittel des Mikrokontrollorgans die Lage des für die Mittelwerte (Emoy und Rmoy) des Sendekanals und des Empfangskanals repräsentativen Punkts in einem kartesischen Koordinatensystem bezüglich drei Zonen bestimmt wird, die eine Hysteresiszone (H) zwischen einer Zone (E), in der die Umschaltung auf den Sendekanal erfolgt, also der Sendekanal ungedämpft sein soll, und einer Zone (R) enthält, in der eine Umschaltung auf den Empfangskanal erfolgt, d.h. der Empfangskanal ungedämpft vorliegen soll, wobei die eventuelle Dämpfung für jeden dieser Kanäle abhängig von Tabellen des Mikrokontrollorgans mit gedämpften bzw. ungedämpften Werten gesteuert wird.

2. Verfahren nach Anspruch 1, dadurch gekennzeichnet, daß mit Hilfe der Rechenmittel des Mikrokontrollorgans die Lage des für die Mittelwert repräsentativen Punkts bezüglich einer Zone kleiner Mittelwerte bestimmt wird, die durch zwei Schwellwerte (Se und Sr) definiert sind, und daß eine Entscheidung über die Dämpfung des Sendekanals und die Nichtdämpfung des Empfangskanals erfolgt, wenn der fragliche Punkt sich in der Zone kleiner Mittelwerte befindet und wenn der Empfangsmittelwert (Rmoy) größer als zweimal der Sendemittelwert (Emoy) plus eine Einheit ist, während eine Entscheidung betreffend die Dämpfung des Empfangskanals und die Nichtdämpfung des Sendekanals getroffen wird, wenn der betreffende Punkt sich in der Zone mit kleinen Mittelwerten befindet, wenn zudem der Empfangsmittelwert (Rmoy) kleiner oder gleich zweimal dem Sendemittelwert (Emoy) plus eine Einheit ist und wenn der Sendemittelwert kleiner als viermal der Empfangsmittelwert (Rmoy) plus fünf Einheiten ist, und daß eine Entscheidung, die beiden Kanäle nicht umzuschalten, getroffen wird, wenn der betreffende Punkt sich in der Zone kleiner Mittelwerte befindet, wenn der Empfangsmittelwert (Rmoy) kleiner als zweimal der Sendemittelwert (Emoy) plus eine Einheit ist und wenn dieser Sendemittelwert größer als viermal der Empfangsmittelwert (Rmoy) plus fünf Einheiten ist, wobei diese Entscheidung von den Rechenmitteln des Mikrokontrollorgans getroffen wird.

3. Verfahren nach Anspruch 2, dadurch gekennzeichnet, daß eine Entscheidung über die Dämpfung des Sendekanals und die Nichtdämpfung des Empfangskanals erfolgt, wenn der fragliche Punkt sich außerhalb der Zone kleiner Mittelwerte befindet und wenn der Empfangsmittelwert (Rmoy) größer als zweimal der Sendemittelwert (Emoy) ist, daß eine Entscheidung betreffend die Dämpfung des Empfangskanals und die Nichtdämpfung des Sendekanals getroffen wird, wenn der betreffende Punkt sich außerhalb der Zone mit kleinen Mittelwerten befindet, wenn zudem der Empfangsmittelwert (Rmoy) kleiner oder gleich zweimal dem Sendemittelwert (Emoy) ist und wenn dieser Sendemittelwert größer als sechsmal der Empfangsmittelwert (Rmoy) ist, und daß eine Entscheidung, die Dämpfung der beiden Kanäle nicht zu verändern, getroffen wird, wenn der betreffende Punkt sich außerhalb der Zone kleiner Mittelwerte befindet, wenn zudem der Empfangsmittelwert (Rmoy) kleiner oder gleich zweimal der Sendemittelwert (Emoy) ist und wenn dieser Sendemittelwert größer als sechsmal der Empfangsmittelwert (Rmoy) ist, wobei diese Entscheidung von den Rechenmitteln des Mikrokontrollorgans getroffen wird.

## Claims

1. A method of controlling attenuation for a digital telephone set having hands-free type operation and provided with a microcontroller (1) for processing digital data, a filtering coder-decoder type circuit (15) or "cofidec", for converting analog speech signals into digital form and vice versa, and at least one microphone (13) and loudspeaker (14) connected to the cofidec circuit via associated amplifier circuits (7 to 10), said microcontroller including calculation means serving in particular continuously to establish an average over a predetermined number of successive digital samples obtained from the signals simultaneously present on the signal send and receive channels at the inputs (16 and 4) of the microcontroller, said means also serving to deduce which of the send and receive channels is to transmit or to continue to transmit without attenuation and correspondingly which one of them is to be attenuated, the method being characterized in that it includes using the calculation means of the microcontroller to determine the position in Cartesian coordinates of a point representing the averages (E_{moy} and R_{moy}) of the send and receive channels relative to three zones constituted by a hysteresis zone (H) between a "switch-to-send channel" zone (E) in which the send channel is provided without attenuation, and a "switch-to-receive channel" zone (R) in which the receive channel is provided without attenuation, the possible attenuation for each of the channels being established as a function of tables of respective attenuated and non-attenuated values in the microcontroller.

2. A method according to claim 1, characterized in that it includes determining the position of the point representative of the averages relative to a small average zone defined by two threshold values (Se and Sr) by using the calculation means of the microcontroller and for deciding on attenuation of the send channel and non-attenuation of the receive channel if said representative point is within the small average zone and if the receive average (R_{moy}) is greater than twice the send average (E_{moy}) plus one, a decision to attenuate the receive channel and not to attenuate the send channel if the representative point is inside the small average zone and the receive average (R_{moy}) is less than or equal to twice the send average (E_{moy}) plus one, and if said send average is less than four times the receive average (R_{moy}) plus five, or a decision to make no change on the send and receive channels if the representative point is inside the small average zone, if the receive average (R_{moy}) is less than twice the send average (E_{moy}) plus one and if the send average is greater than four times the receive average (R_{moy}) plus five, said decision being taken by the calculation means of the microcontroller.

3. A method according to claim 2, characterized in that it includes a decision to attenuate the send channel and not to attenuate the receive channel if the representative point lies outside the small average zone and if the receive average (R_{moy}) is greater than twice the send average (E_{moy}), a decision to attenuate the receive channel and not to attenuate the send channel if the representative point is outside the small average zone, if the receive average (R_{moy}) is less than or equal to twice the send average (E_{moy}), and if said send average is greater than six times the receive average (R_{moy}), or a decision to make no change on the send and receive channels if the representative point is outside the small average zone and if the receive average (R_{moy}) is less than or equal twice the send average (E_{moy}) and if said second average is greater than six times the receive average (R_{moy}), said decision being taken by the calculation means of the microcontroller.
